# EUROPÄISCHE PATENTSCHRIFT

(11) **EP 0 937 012 B1**
(45) Veröffentlichungstag und Bekanntmachung des Hinweises auf die Patenterteilung: **05.12.2001**
(21) Anmeldenummer: 98940130.2
(22) Anmeldetag: 03.07.1998
(51) Int. Cl.: C03C 17/00, C23D 13/00, C04B 41/81, F24C 14/02, A47J 36/02

(54) **TEMPERATURBESTÄNDIGE UND KRATZFESTE ANTIHAFTBESCHICHTUNG**
TEMPERATURE AND SCRATCH-RESISTANT ANTI-STICKING COATING
REVETEMENT ANTI-ADHERENCE RESISTANT AUX TEMPERATURES ELEVEES ET AUX RAYURES

(30) Priorität: 05.07.1997 DE 19728813
(43) Veröffentlichungstag der Anmeldung: 25.08.1999
(73) Patentinhaber: Miele & Cie. GmbH & Co., D-33332 Gütersloh (DE)
(72) Erfinder: BERKENKÖTTER, Herbert, D-59302 Oelde (DE); KAUP, Friedel, D-33332 Gütersloh (DE); KRÜMPELMANN, Thomas, D-33332 Gütersloh (DE); MANGEN, Walter, D-33332 Gütersloh (DE); SILLMEN, Ulrich, D-33332 Gütersloh (DE)
(86) Internationale Anmeldenummer: EP9804126
(87) Internationale Veröffentlichungsnummer: WO9902463

(56) Entgegenhaltungen:
- EP-A- 0 492 417
- AU-B- 524 276
- US-A- 5 435 839

## Beschreibung

Die Erfindung betrifft ein Verfahren zur Herstellung eines Trägermaterials mit einer Oberflächenbeschichtung gemäß Anspruch 1. Ferner bezieht sich die Erfindung auf ein Frägermaterial mit Oberflächenbeschichtung gemäss Anspruch 2.

Es ist allgemein bekannt, Oberflächen aus Email, Glas, Glaskeramik oder Systemen ähnlicher Struktur, d. h., insbesondere Netzwerke aus Siliziumdioxid und/oder anderen Metalloxiden einzusetzen, wenn eine kratzfeste temperaturbeständige Oberfläche gewünscht wird. Ebenso sind Oberflächen aus Metall, wie beispielsweise Stahl, Edelstahl, Aluminium, Chrom bekannt, welche hinsichtlich dieser Eigenschaften zwar schlechter, im Vergleich zu Oberflächen organischer Materialien aber immer noch gut sind. Die vorgenannten Anforderungen werden insbesondere an die Oberflächen im Bereich der Haushaltgeräte gestellt.

Außerdem sind Oberflächen mit einer PTFE (Teflon)- oder Silikonbeschichtung bekannt, welche sich durch ihre Antihafteigenschaften auszeichnen. Insbesondere bei Backformen, Kochund Backgeräten zeigen die Oberflächen mit PTFE- oder silikonähnlichen Systemen eine ausgezeichnete Antihafteigenschaft gegen Lebensmitteleinbrand. Da es sich bei den Oberflächen aber um vergleichbar dicke organische Schichten handelt, liegen ihre maximalen Einsatztemperaturen unter 250°C bis 300°C. Außerdem wird die Oberfläche durch die relativ große Schichtdicke bei zu häufiger bzw. zu grober Behandlung stark beschädigt und verliert in den beschädigten Bereichen ihre vorteilhaften Eigenschaften. Ein weiterer Nachteil der bekannten Oberflächenbeschichtungen liegt darin, dass auf eine vorhandene kratz- und temperaturfeste Oberfläche vor dem Auftrag der organischen Schicht Haftvermittler eingesetzt werden müssen. Dabei erhält man zwar eine Antihaftung als neue Eigenschaft, aber verliert dafür die Kratz- und Temperaturbeständigkeit der Oberfläche des Trägermaterials. Obwohl eine Antihaftbeschichtung im Neuzustand zur Reinigung nicht gescheuert oder gekratzt werden muss, werden die Antihafteigenschaften aber nach einigen Einsätzen, welche vielleicht sogar nahe der maximalen Gebrauchstemperatur liegen, schlechter und es muss doch mehr Kraft zur Reinigung aufgewendet werden. Dadurch wird die Oberfläche mechanisch beschädigt und die Antihafteigenschaft der Oberfläche weiter verschlechtert.

Die Haftung zu wasser- oder ölbasierten Materialien oder zu Wasser/Öl-Emulsionen erfolgt über Bindungskräfte zwischen Molekülgruppen der Oberfläche mit entsprechenden Atomen/Molekülen der anhaftenden Organik. Typische reaktionsfreudige Mölekülgruppen der Oberfläche sind beispielsweise die OH-Gruppen, welche die Oberfläche von silikatischen Systemen weitgehend bestimmen. Die OH-Gruppen an der Trägeroberfläche werden in Bindungen zur Beschichtung verbraucht oder entweichen als Folge einer chemischen Reaktion aus dem System. Die verbleibenden wenig reaktionsfreudigen Molekülgruppen des Beschichtungsmaterials bestimmen dann die Antihaftung.

Die EP-A-0 492 417 beschreibt hierzu ein Verfahren zur Herstellung eines chemisch adsorbierten monomolekularen Films und/oder Polymerfilms durch Auftrag einer Substanz auf ein Trägermaterial. Die Reaktion der aufgetragenen Substanz mit der Substratoberfläche erfolgt hierbei selbständig, insbesondere durch vorhandene Chlorverbindungen, wird jedoch durch Zufuhr von Ultraschallwellen noch beschleunigt Außerdem gehört zum Beschichtungsverfahren aber noch einen weiterer Arbeitsschritt, bei welchem nicht benötigte Bestandteile durch Wegspülen mit einer nichtwässrigen organischen Lösung beseitigt werden. Auch die US-A-5 435 839 offenbart einen dünnen, wasser- und ölabweisenden Überzug auf dem Trägermaterial, bei dem zur Bildung der neuen Substratoberfläche ebenfalls chemisch reaktive Substanzen vorgesehen sind, wie hier Halosilyl- oder Chlorosyl-Gruppen. Ein wesentlicher Nachteil ist, daß die Oberfläche einer solchen relativ dicken Beschichtung sich jetzt wie das organische Material mit geringer Kratzfestigkeit und, Temperaturbeständigkeit verhält. Die darunterliegende anorganische Schicht kann ihre Eigenschaften nicht bis zur Oberfläche durchdringen lassen.

Der Erfindung stellt sich somit das Problem, eine Oberfläche auf metallischen, keramischen und glasartigen Trägermaterialien zu schaffen, welche wesentliche Eigenschaften des Trägermaterials, wie Antihafteigenschaften gegen wasser- und/oder ölbasierte organische Materialien bzw. Wasser-Öl-Emulsionen, behält und gleichzeitig wesentlich temperaturbeständiger und kratzfester ist als übliche PTFE- oder Silikonbeschichtungen und welche außerdem beim Verlieren dieser Eigenschaften im Haushalt wieder regenerierbar sein soll.

Erfindungsgemäß wird dieses Problem durch ein Verfahren gemäß Patentanspruch 1 und ein Produkt gemäß Anspruch 2 gelöst.

Die mit der Erfindung erreichbaren Vorteile bestehen insbesondere in einer Oberfläche mit vielen Eigenschaften, wie Kratz- und Scheuerfestigkeit, Antihaftung gegenüber wasser- und/oder ölbasierte organische Materialien bzw. Wasser-Öl-Emulsionen sowie Temperaturbeständigkeit über 300°C. Das Trägermaterial ist mit einer Substanz beaufschlagt und weist eine Oberflächenbeschichtung aus mehreren Moleküllagen auf, bei welcher sich organische Molekülgruppen der aufgebrachten Substanz mit mindestens einer Moleküllage zur Oberfläche eines anorganischen Trägermaterials hin vernetzen. Dabei sind die organischen Molekülgruppen Polymere oder Oligomere aus einem oder mehreren Bruchstücken. Die Bruchstücke enthalten Siliziummoleküle mit organofunktionellen Molekülgruppen und über Sauerstoff gebundene siliziumfunktionelle Molekülgruppen, welche untereinander und/oder mit dem Trägermaterial gebunden sind. Wesentlicher Bestandteil der aufgebrachten Substanz ist Silikon mit CH₃- Gruppen.

Das Verfahren zur Herstellung eines entsprechenden Trägermaterials mit Oberflächenbeschichtung sieht vor, auf anorganisches Trägermaterial eine organische Substanz mit silikonartigen Netzwerken aufzutragen, wobei anschließend das Trägermaterial mit der aufgebrachten Substanz einer Wärmebehandlung ausgesetzt wird, bei der Dauer und Temperatur so gewählt werden, dass es zu einem Zersetzen bzw. Verdampfen überschüssiger organischer Substanz kommt und gleichzeitig eine Reaktion stattfindet, bei der sich Moleküle der organischen Substanz ebenso miteinander vemetzend verbinden, wie sich Moleküle des Trägermaterials mit Molekülen der aufgebrachten Substanz verbinden. Dabei bildet sich in den obersten Moleküllagen ein neues Netzwerk aus Molekülen des Trägermaterials und Molekülen der aufgebrachten Substanz, wodurch eine neue temperatur- bzw. zersetzungsstabile Beschichtung auf dem Trägermaterial entsteht. Die Substratoberfläche zeigt also auf molekularer Ebene zumindest lokale Netzwerkstrukturen, wobei an der obersten Netzwerkebene mindestens eine Moleküllage reaktiver haftvermittelnder Molekülgruppen gebunden ist. In diesem Übergangsbereich werden die reagierenden Molekülgruppen durch hydrophobe und/oder oleophobe Atome oder Moleküle oder Molekülgruppen ersetzt. Eine vorteilhafte Ausgestaltung des Verfahrens zeigt, dass nicht gewollte organische Schutzfilme auf Antihaftoberflächen durch Temperaturbehandlung wieder entfernt werden können, ohne dass die Antihafteigenschaften verloren gehen. Durch Temperaturbehandlung oberhalb der Zersetzungstemperatur der silikonartigen Substanz wird auch das Anwachsen einer organischen Schicht abschließend oder während des Prozesses bis auf den genannten Grenzbereich zwischen Anorganik und Organik verhindert. Resultierend verbleibt das anorganische Substrat, das in seiner obersten Ebene organisch modifiziert ist. Ein vorteilhaftes Einsatzgebiet für derartig modifizierte Oberflächen.sind die Substratoberflächen, die emailliert sind. Besonders vorteilhafte Eigenschaften verleiht eine Verwendung einer modifizierten Oberfläche einem Kochfeld aus Glaskeramik, einem Back-, Brat-, Grill- und/oder Mikrowellenofen und/oder den in einen Garraum einbringbaren Teilen und/oder Back-, Brat-, Kochgefäßen, z.B. Gargutträger.

Ausführungsbeispiele der Erfindung werden anhand der Zeichnungen und der nachfolgenden Beschreibung näher beschrieben. Es zeigen:
- Figur 1: ein Silizium-Sauerstoffnetzwerk einer üblichen Glasoberfläche oder einer Oberfläche eines glasartigen Materials (Stand der Technik),
- Figur 2: ein Silizium-Sauerstoffnetzwerk nach Figur 1 mit einer herkömmlichen Oberflächenbeschichtung (Stand der Technik),
- Figur 3: ein Silizium-Sauerstoffnetzwerk nach Figur 1 mit einer erfindungsgemäß modifizierten Oberfläche

Die Eigenschaften einer Oberfläche werden im Gebrauch immer durch die letzte außen liegende Beschichtung definiert. Nachfolgend wird eine erfindungsgemäß geschaffene, d. h., modifizierte Antihaftbeschichtung und ein Verfahren zum Herstellen einer derartig modifizierten Oberfläche anhand einer glas- oder keramikartigen Substratoberfläche beschrieben. Durch diese Beschreibung wird jedoch eine Modifizierung anderer Substratoberflächen nicht ausgeschlossen.

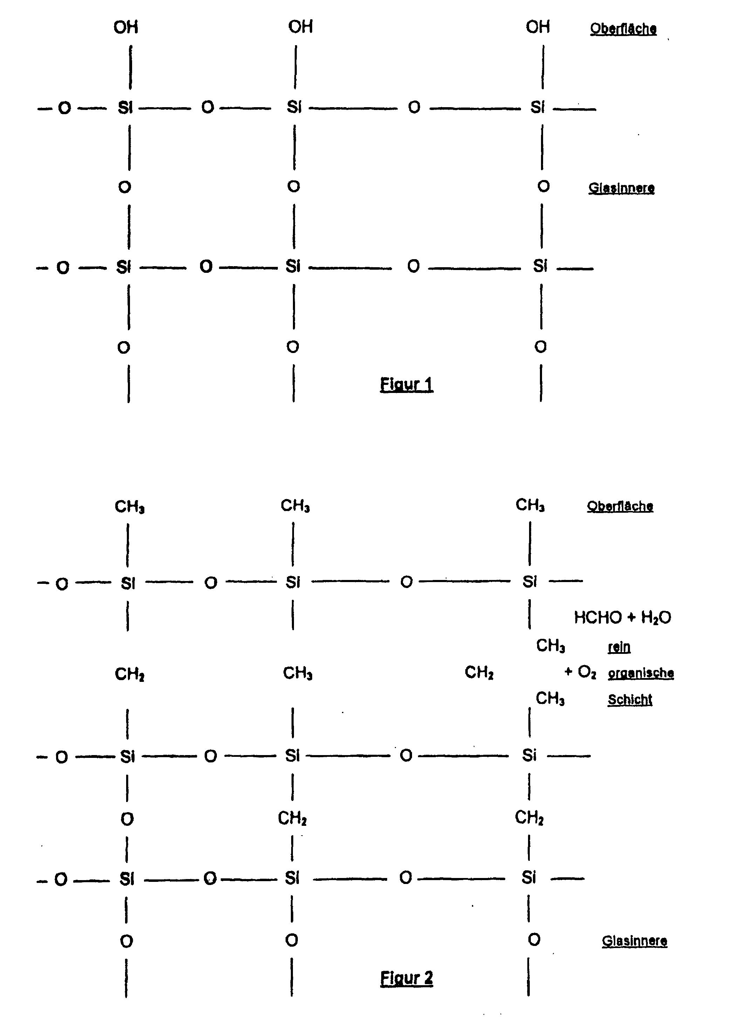

In der Figur 1 ist zunächst ein Silizium-Sauerstoffnetzwerk eines üblichen Glas- oder glasartigen Trägermaterials ohne Beschichtung dargestellt. An der Oberfläche eines derartigen Trägermaterials bilden sich typischerweise Molekülgruppen, wie die dargestellten OH-Gruppen aus. Diese Molekülgruppen können über eine chemische Reaktion, z.B. Kondensation, einfach in die Lage versetzt werden, mit wasserhaltigen und/oder wasserbasierten Belägen auf der Oberfläche zu reagieren. Ebenso besitzen sie aber auch eine starke Reaktion mit pflanzlichen und/oder tierischen Fetten. Dies führt dazu, dass sich im Gebrauch auf der Oberfläche stark anhaftende Verunreinigungen bilden, die kaum oder nur schwer wieder entfernbar sind.

In der Figur 2 ist ein Netzwerk dargestellt, welches die Strukturen zeigt, wenn auf das Trägermaterial eine eigenständig bestehen bleibende organische Beschichtung aufgetragen wird. An den äußeren Moleküllagen bilden sich zwar reaktionsträge Molekülgruppen (CH₃) aus, wodurch eine verbesserte Antihaftwirkung erzielt wird, jedoch ist die eigenständig verbleibende, relativ dicke organische Beschichtung zumindest gegen mechanische Einflüsse sehr anfällig.

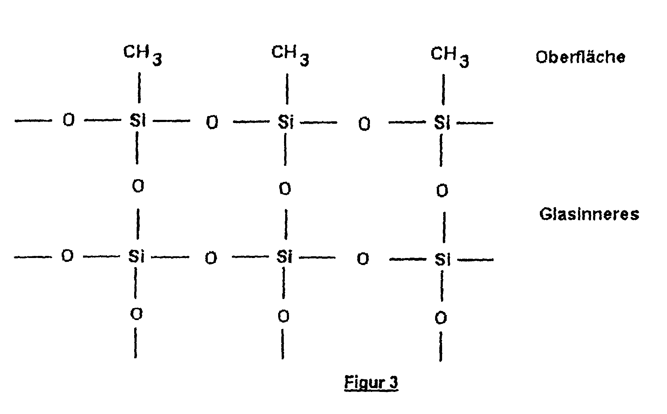

Die Figur 3 zeigt dagegen ein erfindungsgemäß erzeugtes Netzwerk, bei dem auch die oberste Moleküllage von reaktionsträgen Molekülen der CH₃-Gruppe gebildet wird, an die sich aber die Molekularstruktur des Trägermaterials quasi unmittelbar anschließt.

Die in Figur 1 als abschlussbildende Molekülgruppen dargestellten OH-Gruppen sind somit durch reaktionsträge Molekülgruppen der aufgebrachten Substanz substituiert. Die hier gezeigten Methylgruppen besitzen hydrophobe und oleophobe Eigenschaften. Ebenso können aber auch Phenylgruppen die bisherigen OH-Gruppen ersetzen. Wesentlich ist, dass die organische Modifikation der Oberfläche, d.h., der Einbau von Kohlenstoff (C-Atome) nur in der obersten Lage der Oberfläche erfolgt, maximal jedoch bis zu einigen wenigen Lagen tief. Die thermischen und mechanischen Eigenschaften des anorganischen Trägermaterials bleiben dadurch weitgehend erhalten. Es wurde im Labormaßstab bei den modifizierten Oberflächen nachgewiesen, dass z. B. Methylgruppen in SiO₂ - Netzen bis zu sehr hohen Temperaturen (> 500 °C) erhalten bleiben.

Die reaktiven haftvermittelnden Molekülgruppen, welche die obere Moleküllage der ursprünglichen Substratoberfläche bilden, werden durch hydrophobe, oleophobe bzw. gleichzeitig hydrophobe und oleophobe Atome/Moleküle/Molekülgruppen ersetzt. Die Oberfläche des modifizierten Systems besteht aus nur einer bzw. ganz wenigen Netzebenen, in denen reaktionsträge Molekülgruppen gebunden sind. Es wird somit nur in der obersten Lage der Oberfläche eine organisch modifizierte Anorganik erzeugt. Die überschüssige organische Substanz löst sich während der Wärmebehandlung des Beschichtungsverfahrens weitgehend auf, ohne eine eigenständig bestehen bleibende Schicht zu bilden. Die durch dieses Verfahren entstandene Oberfläche kann ohne Schaden mechanisch mit den gleichen Mitteln, wie ein Glas- und/oder eine Keramikoberfläche gereinigt werden. Sie ist temperaturbeständig bis ca. 500°C und besitzt eine Antihaftwirkung.

Der Auftrag der organischen Substanz kann in verschiedenster Weise erfolgen. Mit bekannten Verfahren wird die Trägermaterialoberfläche, welche lokal eine Netzwerkstruktur zeigt, insbesondere mit mindestens einer silikonartigen Komponente oder deren thermischen Zersetzungsprodukten in flüssiger Form oder aus der Gasphase bei niedriger Substanztemperatur in Kontakt gebracht. Es erfolgt eine Vernetzung innerhalb der Flüssigkeit mit den reaktiv haftvermittelnden Molekülgruppen des Trägermaterials. Die veränderte Oberfläche (einschließlich Träger) wird anschließend über einen von der Schichtdicke abhängigen Zeitraum auf eine Temperatur oberhalb der Zersetzungstemperatur des silikonartigen Netzwerkes getempert. Die bei dem Beschichtungsvorgang möglicherweise zu dick geratene organische Schicht aus der vernetzten silikonartigen Flüssigkeit verdampft oder zersetzt sich dadurch pyrolytisch. Es verbleiben nur die geforderte eine Moleküllage dieser Substanz mit den Antihafteigenschaften, die an das Siliziumoxid- oder andere Metalloxidnetze bzw. an die außenliegenden z. B. OH - Gruppen andocken. Als Tempertemperatur wird eine Temperatur zwischen 300°C und 700 °C verwendet. Die silikonartige Flüssigkeit enthält konventionelle Polydimethylsiloxane oder Polydimethylsiloxane mit speziellen Abschlüssen wie z. B. Phenyl-, Vinyl-, Hydrid-, Silanol-, Amino-, Epoxy- oder Carbinol-Abschluss. Die Silikonflüssigkeiten sind wenig reaktionsfreudig oder mit reaktiven Gruppen modifiziert. Die silikonartige Flüssigkeit kann zusätzliche Komponenten wie z. B. Silikonharze und organische Lösungs- und Verdünnungsmittel, Wasser, Emulgator, Reinigungskomponenten, Vernetzungsbeschleuniger, Verkapselungssysteme o. ä. enthalten.

Das mit der erfindungsgemäßen Oberflächenbeschichtung versehene Trägermaterial kann insbesondere überall dort zur Anwendung gelangen, wo entweder eine häufige Reinigung unerlässlich ist und ein besserer Korrosionsschutz gegen thermische Korrosion oder chemischen Angriff (Waschlauge, Salzwasser) erforderlich ist. Besonders vorteilhaft ist eine modifizierte Oberfläche bei Haushaltgeräten, beispielsweise bei Kochfeldem aus Glaskeramik, Back-, Brat-, Grill- und/oder Mikrowellenöfen, inklusive Teilen davon, Back-, Brat-, Kochgefäßen mit emaillierten, verchromten oder Edelstahloberflächen, Waschmaschinentrommeln, oder Geschirrspülbottichen aus Edelstahl. Aber auch bei Heißmangeln mit Teilen aus Aluminium, Aluminiumoxid, mit oder ohne durch Eloxal - oder hardanodisch beschichteten gehärteten Oberflächen und/oder Bügeleisensohlen bringt eine modifizierte Oberfläche viele Vorteile, wie z.B. eine Antihaftung gegen Chemikalien (z.B. Stärke aus Bügelwäsche). Auf einem Rohrheizkörper mit modifizierter Oberfläche des Trägermaterials, beispielsweise in Wasserkochem, Wasch- oder Geschirrspülmaschinen entstehen kaum noch Kalkablagerungen. Aber auch auf Glas - oder glasartigem Trägermaterial, wie z. B. bei Getränkeflaschen, Laborgläsern, Glas-, Glaskeramik-, Keramikflächen, Systemen ähnlicher chemischer Struktur, wie Glasbedienblenden, Türscheiben allgemein, Schaugläsem, großflächigen 3D-Glasbauteilen an Dunstabzugshauben, (Küchen-) Schrankfenstern oder auf reinen metallischen oder beschichteten metallischen Oberflächen, wie z.B. Edelstahl- oder Aluminiumoberflächen jeder Art kann eine derartige Modifizierung eingesetzt werden. In vielen Einsatzfällen ist eine oben beschriebene Oberfläche eines Trägermaterials glatter ausgebildet, was eine geringere Gleitreibung und häufig dadurch weniger Geräusche zur Folge hat.

Bei Koch-, Gar-, Back- oder Bratgefäßen aus emailliertem Stahl, Glas, Glaskeramik, Keramik, Porzellan u. ä. (z. B. Topf- oder Kuchenform) sollte mindestens die innere Oberfläche des beschichteten Trägermaterials, welche in Kontakt mit dem Gargut kommt, nach einem oben beschriebenen Verfahren behandelt werden. Am besten ist es natürlich, wenn zusätzlich die anderen Oberflächen auch verfahrenstechnisch behandelt werden. Auch bei Türscheiben mit IR-Spiegel auf Basis von bekannten Zinndioxidbeschichtungen kann die Oberfläche des Zinndioxidspiegels nach dem gleichen Verfahren wie die Siliziumdioxid- und anderen glas- oder keramikartigen Metalloxidoberflächen eine organisch modifizierte Oberflächenbeschichtung erhalten.

Oberflächen, welche zur Modifizierung geeignet sind, können bei Glas-, Glaskeramik-, Keramikflächen und Systemen ähnlicher chemischer Struktur an Elektrohausgeräten wie z. B. Glasbedienblenden, Türscheiben allgemein, Schaugläsern, großflächigen 3D-Glasbauteilen an Dunstabzugshauben, (Küchen-) Schrankfenstem u.a. eingesetzt werden. Zubehörteile eines Garraumes aus Glas, Glaskeramik, Keramik und verwandten Materialien wie z. B. Backbleche, Fettpfannen, flächige entnehmbare Seiten- oder Deckenteile, Lampenabdeckungen, Türinnenscheiben u.a. für ein Gargerät, wie z. B. Backofen oder Mikrowellengerät. Dabei wird mindestens eine Seite der Oberfläche auf oben beschriebene Antihaftung organisch modifiziert, vorzugsweise jedoch alle. Bei Koch-, Gar-, Back- oder Bratgefäßen aus Glas, Glaskeramik, Keramik, Porzellan u.ä. (z. B. Topf- oder Kuchenform) sollte mindestens die innere Oberfläche, welche in Kontakt mit dem Gargut kommt, eine oben beschriebene modifizierte Oberfläche erhalten. Am besten ist es allerdings, diese auch außen zu modifizieren. Aber auch bei Türscheiben mit IR-Spiegel auf Basis von bekannten Zinndioxidbeschichtungen kann die Oberfläche des Zinndioxidspiegels nach dem gleichen Verfahren wie die Siliziumdioxid- und anderen glas- und keramikartigen Metalloxidoberflächen organisch modifiziert werden.

Bei einem Pyrolyseofen mit Ofenraum und Zubehörteilen aus Pyrolyseemail und mit einem Pyrolysereinigungsgang bei bekannten Temperaturen zwischen 400°C und 600 °C wird das Email ebenfalls wie oben beschrieben modifiziert. Die modifizierte Antihaftschicht widersteht auch den üblichen Pyrolysetemperaturen von 480°C. Die Türinnenscheibe sollte zusätzlich antihaftend modifiziert sein. Der Pyrolyseofen hat vorzugsweise eine Glastür mit Glaskeramikinnenscheibe ohne Aufbaurahmen, wobei die Glaskeramikinnenscheibe auch modifiziert sein sollte. Ihre Temperaturbeständigkeit erlaubt eine Regenerierung der modifizierten Oberfläche nach jedem Reinigungsvorgang bei darauffolgender Aussetzung einer hohen Temperatur. Aber auch für einen Ofen mit verchromten Zubehörteilen oder Teilen aus Edelstahl in oder an dem Garraum wie z.B. Grillroste, Grillspießgestänge, Aufnahmegitter für Backbleche, Teleskopauszüge, Schwadenleisten und/oder Luftausblasblenden (außerhalb des Ofenraums!) u. a. sollten die Oberflächen der Teile wie oben beschrieben modifiziert sein.

Das Anhaften unerwünschter Systeme muss vermieden werden. Einige Reinigungsmittel, beispielsweise Edelstahlreiniger sind jedoch Kombinationen aus Reinigem und Schutzmitteln, die extra daraufhin entwickelt wurden, filmartige Schutzschichten auf den mit ihnen behandelten Oberflächen zu bilden. Schutzfilme dieser Art sind auf Antihaftoberflächen nicht sinnvoll, weil entweder die Antihaftwirkung so gut ist, dass diese Schutzfilme nicht haften können, oder es muss eine einfache Möglichkeit geschaffen werden, den fremden Schutzfilm wieder zu entfernen, damit die Antihafteigenschaften wirksam werden können. Daher soll die Oberfläche möglichst sowohl Antihaft-, als auch kratz- und scheuerfeste Eigenschaften aufweisen. Grundlage einer solchen Oberfläche kann beispielsweise die Behandlung einer allgemein bekannten Emailoberfläche sein. Eine Regenerierung der modifizierten Oberfläche erfolgt dadurch, dass die zuvor beliebig gereinigten, gepflegten und/oder geschützten Antihaftoberflächen einem kurzen Temperatur-Zeit-Profil oberhalb der Zersetzungstemperatur des Schutzfilms ausgesetzt sind. Dabei wird der unerwünschte Schutzfilm aus dem Behandlungsmittel zerstört, was durch Abdampfen oder pyrolytische Zersetzung erfolgt. Da die Antihaftwirkung diese Temperaturbehandlung ohne Schaden übersteht, ist sie auch nach jedem Reinigungs-, Pflege- und/oder Schutzvorgang wieder voll nutzbar. Die unter einer nicht erwünschten organischen Deckschicht liegende organisch modifizierte anorganische Schicht mit Antihafteigenschaften kann durch Temperaturbehandlung wieder regeneriert werden.

Backöfen, die mit oben beschriebenen Oberflächen im Ofenraum und/oder Zubehörteilen wie z. B. Backblechen ausgerüstet sind, eignen sich gut zur Regenerierung der modifizierten Oberflächen. Sie können ein vom Benutzer anwählbares Schaltelement aufweisen, dessen Betätigung die Ofenfunktion "Regenerierung der Antihaftung" aktiviert. Damit wird ermöglicht, dass ein Benutzer nach zunächst gewohnter und sorgfältiger Reinigung mit geringerem Reinigungsaufwand von Ofen und Zubehör anschließend die modifizierte Oberfläche wieder eigenständig reaktivieren kann. Die Zubehörteile des Ofens werden dazu leer in den Ofenraum eingebracht. Mit Starten einer Funktion "Regenerierung der Antihaftung" fährt der Ofen ein Zeit-Temperatur-Profil und entfernt vorhandene organische Schutzfilme aus den Reinigungsmitteln von der modifizierten Oberfläche. Die Oberfläche wird von einer eventuell vorhandenen rein organischen Schicht gesäubert und die modifizierte Antihaftoberfläche liegt wieder oben. Dauer und Temperatur dieses Regeneriervorganges sind für den Benutzer mit Eingabemitteln innerhalb vorgegebener Grenzen veränderbar (von minimalem bis maximalem Effekt). Vorzugsweise liegt die Behandlungstemperatur zwischen 200°C und 400°C und die Haltezeit zwischen 15 bis 30 Minuten.

Eine Edelstahloberfläche ist nicht besonders kratzfest und es bietet sich daher an, diese mit einer Oberflächenbeschichtung zu versehen, wobei der hochwertige optische Eindruck des Edelstahls nicht verändert werden soll. Da Edelstahl jedoch bei höheren Temperaturen schnell und irreversibel Anlauffarben annimmt, muss eine Verfärbung des Edelstahls ausgeschlossen werden. Eine solche Möglichkeit besteht u.a. darin, eine sehr dünne transparente Glas- oder Keramikschicht (z. B. Wasserglas) bei niedrigen Temperaturen (z.B. < 100°C) direkt auf die Edelstahloberfläche aufzubringen, um eine farbliche Veränderung des Edelstahls zu vermeiden. Anschließend wird diese Oberfläche nach oben beschriebenem Verfahren behandelt.

## Patentansprüche

1. Verfahren zur Herstellung eines Trägermaterials bestehend aus Edelstahlflächen von Haushaltsgeräten und/oder Glastüren und Bedienungsblenden dieser Haushaltsgeräte, Kochfeldern aus Glaskeramik, aus emaillierten Blech oder Edelstahl für Garraumbehätter und Backöfen, mit einer Oberflächenbeschichtung,
bei dem auf das Trägermaterial eine organische Substanz mit silikonartigen Netzwerken, ausgewählt aus der Gruppe von Polydimethylsiloxanen oder Polydimethylsiloxanen mit Phenyl-, Vinyl-, Hydrid-, Silanol-, Epoxy- oder Carbinolabschluß, aufgetragen wird, wobei eine Vernetzung der Substanz mit dem Trägermaterial erfolgt,
daß anschließend das Trägermaterial mit der aufgebrachten Substanz einer Wärmebehandlung mit einer Temperatur von 300 bis 700 °C ausgesetzt wird, wobei die Dauer der Wärmebehandlung so gewählt wird,
daß es zu einer pyrolytischen Zersetzung bzw. Verdampfung überschüssiger organischer Substanz kommt,
und daß gleichzeitig eine Reaktion stattfindet, bei der sich Moleküle der organischen Substanz miteinander vernetzend verbinden und ebenso Moleküle des Trägermaterials mit Molekülen der aufgebrachten Substanz verbinden,
derart, daß nur eine Moleküllage der organischen Substanz verbleibt, so daß sich ein neues Netzwerk aus Molekülen des Trägermaterials und Molekülen der aufgebrachten Substanz bildet, wodurch eine neue temperatur- bzw. zersetzungsstabile Beschichtung auf dem Trägermaterial entsteht.

2. Trägermaterial, bestehend aus Edelstahlflächen von Haushaltsgeräten und/oder Glastüren und Bedienungsblenden dieser Haushaltsgeräte, Kochfeldern aus Glaskeramik, aus emaillierten Blech oder Edelstahl für Garraumbehälter und Backöfen, mit einer Oberflächenbeschichtung hergestellt nach dem Verfahren von Anspruch 1.

## Claims

1. Method of producing a carrier material, comprising stainless steel faces of domestic appliances and/or glass doors and control panels of these domestic appliances, cooking areas formed from glass ceramics, from enamelled sheet metal or stainless steel for cooking area containers and ovens, with a surface coating,
wherein an organic substance is applied to the carrier material and has silicone-like lattices selected from the group of polydimethyl siloxanes or polydimethyl siloxanes with a phenyl, vinyl, hydride, silanol, epoxy or carbinol termination, a cross-linking of the substance with the carrier material being effected,
wherein subsequently the carrier material, with the substance applied thereto, is subjected to a heat treatment at a temperature of 300 to 700° C, the duration of the heat treatment being so selected
that a pyrolytic decomposition or evaporation of excess organic substance results,
and that a reaction simultaneously occurs, wherein molecules of the organic substance are joined together in a cross-linking manner, and likewise molecules of the carrier material are joined to molecules of the applied substance,
in such a way that only one molecular layer of the organic substance remains, so that a new lattice is formed from molecules of the carrier material and molecules of the applied substance, whereby a new temperature- or decomposition-resistant coating is produced on the carrier material.

2. Carrier material, comprising stainless steel faces of domestic appliances and/or glass doors and control panels of these domestic appliances, cooking areas formed from glass ceramics, from enamelled sheet metal or stainless steel for cooking area containers and ovens, with a surface coating produced according to the method of claim 1.

## Revendications

1. Procédé de fabrication d'un matériau de support composé de surfaces en acier spécial d'appareils ménagers et/ou de portes vitrées et de panneaux de commande de ces appareils ménagers, de plaques de cuisson en vitrocéramique, en tôle émaillée ou en acier spécial pour chambres de fermentation et fours de boulangerie, présentant un revêtement de surface,
dans lequel est appliquée sur le matériau de support une substance organique comportant des réseaux de type silicone, sélectionnée parmi le groupe composé de polydiméthylsiloxanes ou de polydiméthylsiloxanes comportant un groupe terminal phényle, vinyle, hydrure, silanol, époxy ou carbinol, une réticulation de la substance avec le matériau de support se produisant,
dans lequel le matériau de support avec la substance appliquée est ensuite soumis à un traitement thermique à une température comprise entre 300 et 700 °C, la durée du traitement thermique étant sélectionnée de façon telle que l'on obtient une décomposition pyrolytique ou une évaporation de la substance organique en excès,
et dans lequel se produit simultanément une réaction dans laquelle des molécules de la substance organique se lient les unes aux autres par réticulation, et les molécules du matériau de support se lient également aux molécules de la substance appliquée de façon telle que seule une couche moléculaire de la substance organique subsiste, de sorte qu'il se forme un nouveau réseau de molécules du matériau de support et de molécules de la substance appliquée, un nouveau revêtement stable à la température et à la décomposition se créant alors sur le matériau de support.

2. Matériau de support, composé de surfaces en acier spécial d'appareils ménagers et/ou de portes vitrées et de panneaux de commande de ces appareils ménagers, de plaques de cuisson en vitrocéramique, en tôle émaillée ou en acier spécial pour chambres de fermentation et fours de boulangerie présentant un revêtement de surface fabriqué selon le procédé de la revendication 1.
